# EUROPEAN PATENT APPLICATION

(11) **EP 1 096 704 A2**
(43) Date of publication of application: **02.05.2001**
(21) Application number: 00309049.5
(22) Date of filing: 16.10.2000
(51) Int. Cl.: H04B 10/08

(54) **Monitor module for a fiber optic monitoring system**

(30) Priority: 29.10.1999 US 430640
(71) Applicant: LUCENT TECHNOLOGIES INC., Murray Hill, New Jersey 07974-0636 (US)
(72) Inventor: Jennings, Mark Richard, Andover, NJ 07821 (US); Leone, Frank Salvatore, Berkeley Heights, NJ 07922 (US); Pimpinella, Richard Joseph, Hampton, NJ 08827 (US)
(74) Representative: Buckley, Christopher Simon Thirsk

(57) **Abstract**

A monitor module that is used to detect optical test signals traveling through optical fibers in an optical fiber network. The monitor module is sized to be received within the monitor shelf of a fiber administration system. The monitor module contains an optical detector that detects an incoming optical signal and converts that signal into a corresponding electronic signal. The electronic signal is then amplified, linearized and read by a microprocessor. The signal is then forwarded to an external shelf controller, wherein the signal is used to determine the optical performance of the optical fibers that are connected to the monitor module.

## Description

### RELATED APPLICATIONS

This application is related to the following co-pending U.S. Patent Applications:
U.S. Patent Application No. 09/???,???, entitled, INTELLEIGENT OPTICAL TRANSMITTER MODULE, filed ?????, 1999;
U.S. Patent Application No. 09/???,???, entitled, SYSTEM AND METHOD FOR MONITORING OPTICAL FIBER INTEGRITY BETWEEN THE TELECOMMUNICATIONS PROVIDER AND A CUSTOMER'S PREMISES, filed ?????, 1999; and
U.S. Patent Application No. 09/???,???, entitled, COMBINED OPTICAL TRANSMITTER AND MONITOR MODULE FOR A FIBER OPTIC MONITOR SYSTEM, filed ?????, 1999.

### BACKGROUND OF THE INVENTION

### 1. Field of the Invention

The present invention relates to optical fiber monitoring devices that are used to monitor light signals transmitted through an optical fiber. More particularly, the present invention relates to optical fiber monitoring devices, for use in an optical fiber administration system, that detect test signals traveling through an optical fiber and convert the test signals into an electronic data for analysis.

### 2. Description of the Prior Art

There are many applications that utilize an optical fiber network to establish optical communications between a host digital terminal (HDT) at a central office and an optical network unit (ONU) at a remote location. Since a central office serves as the point of origin for the optical fibers in the optical fiber network, equipment is used at the central office to organize various optical fibers in the optical fiber network. In certain optical networks, the optical fibers at the central office are connected to dedicated pieces of equipment, such as optical signal transmitters, that serve only one purpose. If the optical fibers are to be connected to another piece of equipment, such as test equipment, the optical fibers must be manually connected to that new piece of equipment.

In more sophisticated applications, optical fibers are terminated at fiber administration systems at the central office. Fiber administration systems enable many different types of equipment to be connected to the optical fibers without having to reroute the optical fibers from their point of termination.

In many fiber administration systems, as the optical fibers in a network enter the central office, they are directed into an optical distribution frame where the individual optical fibers are terminated in an organized manner. Such fiber administration systems are exemplified by the LGX® fiber administration system which is currently manufactured by Lucent Technologies of Murray Hill, New Jersey, the assignee herein.

Each optical distribution frame located at the central office typically defines a plurality of bays, wherein each bay houses several different types of dedicated equipment shelves. One type of dedicated equipment shelf contained within a fiber distribution system is a fiber distribution shelf. Located within the fiber distribution shelves are optical connection ports that receive the ends of all of the individual optical fibers that enter the central office and are contained within the optical fiber network. By terminating each optical fiber at an optical connection port on one of the different fiber distribution shelves, the location of each optical fiber becomes known within the overall assembly. Once terminated at a known address on one of the fiber distribution shelves, each optical fiber can be selectively coupled to a variety of other types of equipment contained within other shelves of the fiber distribution system.

At the opposite end of the various optical fibers are the customers of the telecommunications provider. For customers having smaller scale telecommunications needs, the optical signals transmitted on the optical fiber network are converted to electrical signals, prior to termination of the customer premises in a traditional manner. As such, the entire optical network is controlled and maintained by the telecommunications provider. However, with customers that have large-scale telecommunication requirements, it is not uncommon for the telecommunications provider to run a pair of optical fibers from the optical network directly into the customer premises. One fiber is used to receive signals from the telecommunications provider and the other fiber is used to send signals to the telecommunications provider.

With customers that receive dedicated optical fiber pairs from their telecommunications provider, all incoming and outgoing transmissions are directed through these optical fibers. Accordingly, to disconnect either of these optical fibers is to completely disrupt the telecommunications service to that customer.

When a customer reports trouble with telecommunications transmissions, the problem can be either related to the optical fibers owned by the telecommunications provider or the telecommunications equipment owned by the customer. Since the optical fiber leading to the customer premises cannot be disconnected, it is difficult to pinpoint whether a problem is contained in the telecommunication providers equipment or the customer's equipment. The result is that a technician from the telecommunications provider must be dispatched to the customer premises and time consuming manual tests must be conducted to locate the exact point of the problem.

In addition to monitoring and testing optical fibers leading to a specific customer premise, it may also be desirable to monitor and/or test newly deployed optical cables as well as other fiber optic cables routed between other locations in an optical fiber communications network.

A need therefore exists for equipment that can be used to test the integrity of an optical fiber pair leading to a customer premises or other location from a remote location, thereby improving the efficiency by which a line error can be located.

### SUMMARY OF THE INVENTION

The present invention is a monitor module that is used to detect optical test signals traveling through optical fibers in an optical fiber network. The monitor module is sized to be received within a monitor shelf of a fiber administration system, or in a dedicated system. The monitor module contains an optical detector that detects an incoming optical signal and converts that signal into a corresponding electronic signal. The electronic signal is then amplified, linearized and read by a microprocessor. The signal is then forwarded to an external shelf controller when used in connection with a fiber administration system, wherein the signal is used to determine the optical performance of the optical fibers that are connected to the monitor module.

### BRIEF DESCRIPTION OF THE DRAWINGS

For a better understanding of the present invention, reference is made to the following description of an exemplary embodiment thereof, considered in conjunction with the accompanying drawings, in which:
FIG. 1 is a perspective view of an optical fiber administration system containing a first plurality of bays and a second plurality of shelves in each bay;
FIG. 2 is a perspective view of a dedicated piece of equipment containing loop back monitor shelves;
FIG. 3 is a schematic view of an exemplary embodiment of a monitor module in accordance with the present invention; and
FIG. 4 is an exploded perspective view of a loop back monitoring shelf containing an exemplary embodiment of a monitor module.

### DETAILED DESCRIPTION OF THE DRAWINGS

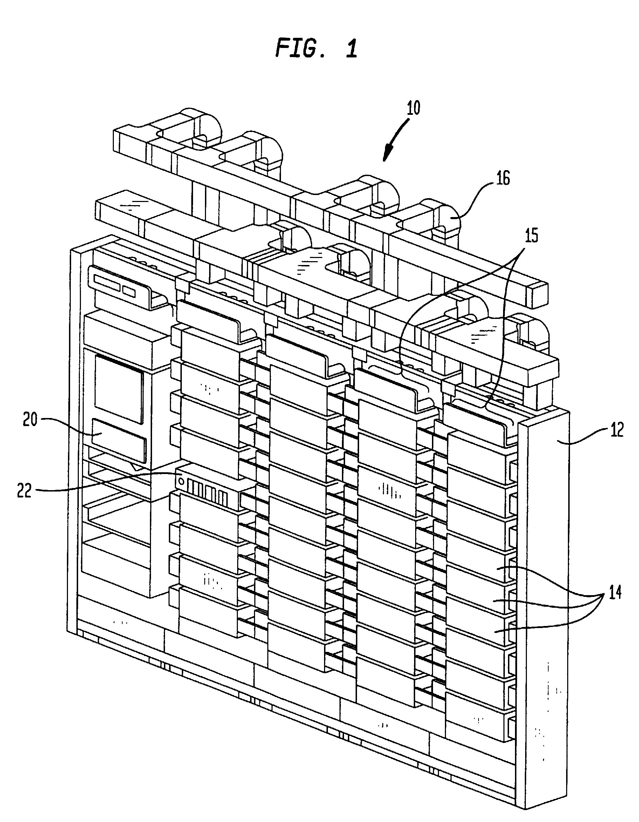

In Fig. 1, a fiber administration system 10 is shown. The exemplary fiber administration system 10 includes an optical fiber distribution frame 12 that is affixed in a set position to the floor of a central office. The fiber distribution frame 12 defines a plurality of bays 15. Each bay 15 is a vertical structure that supports a plurality of different shelves 14. The different shelves 14 come in one of three standard sizes, having a five inch height, a seven inch height or a nine inch height. A network of conduits 16 lead the various optical fibers from the optical fiber network to the fiber distribution shelves 14. Contained within those conduits 16 are the different dedicated pairs of optical fibers that are dedicated to different customer facilities.

In addition to the different shelves, the fiber administration system also includes a systems controller 20. The systems controller 20 runs the software that controls the fiber administration system 10.

Contained within the fiber administration system 10 is at least one monitoring shelf 22. In the exemplary embodiment, pairs of dedicated optical fibers that lead to a specific customer facility are received by one of the monitoring shelves 22 within the fiber administration system 10.

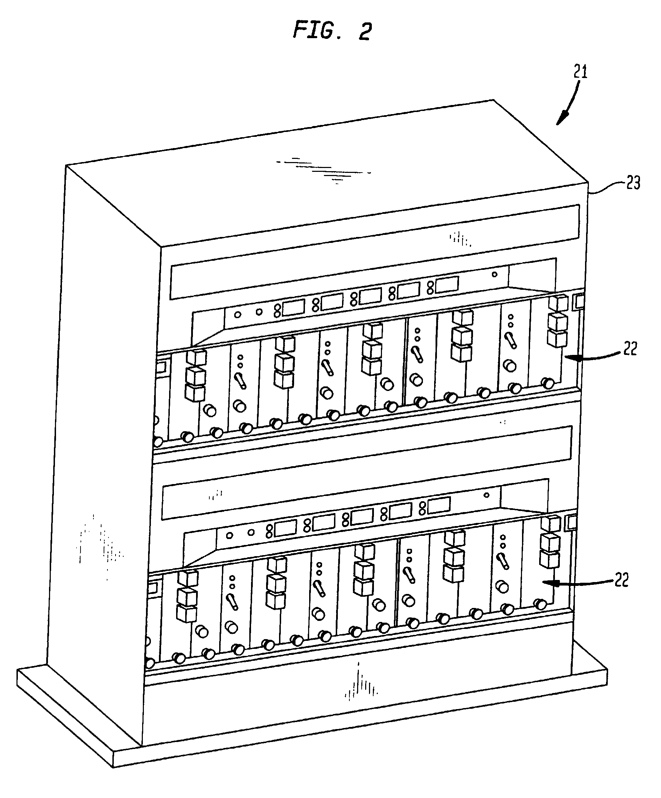

Not every optical fiber system uses a fiber administration system such as that shown in Fig. 1. Accordingly, in such systems, monitoring shelves cannot be simply added to the structure of the fiber administration system. In such applications, the monitoring shelves can be built into a self-contained piece of equipment. Referring to Fig. 2, such a dedicated piece of equipment 21 is illustrated. In Fig. 2, a small frame 23 is provided. The small frame 23 retains at least one monitoring shelf 22. In optical fiber networks that do not use fiber administration systems, the small frame 23 can be brought into the telecommunication provider's facility and the optical fibers of the optical fiber network can be manually interconnected with the monitoring shelves 22.

As stated previously, the monitoring shelves may include monitoring equipment such as the monitor module which is the subject of the present invention, as well as other transmission and monitor modules which may be deployed to receive transmissions from the optical transmitter modules.

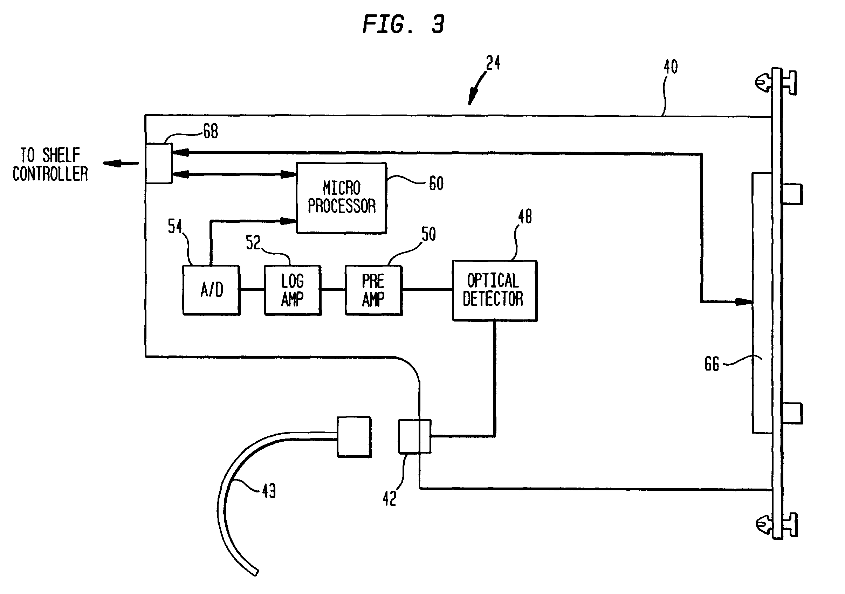

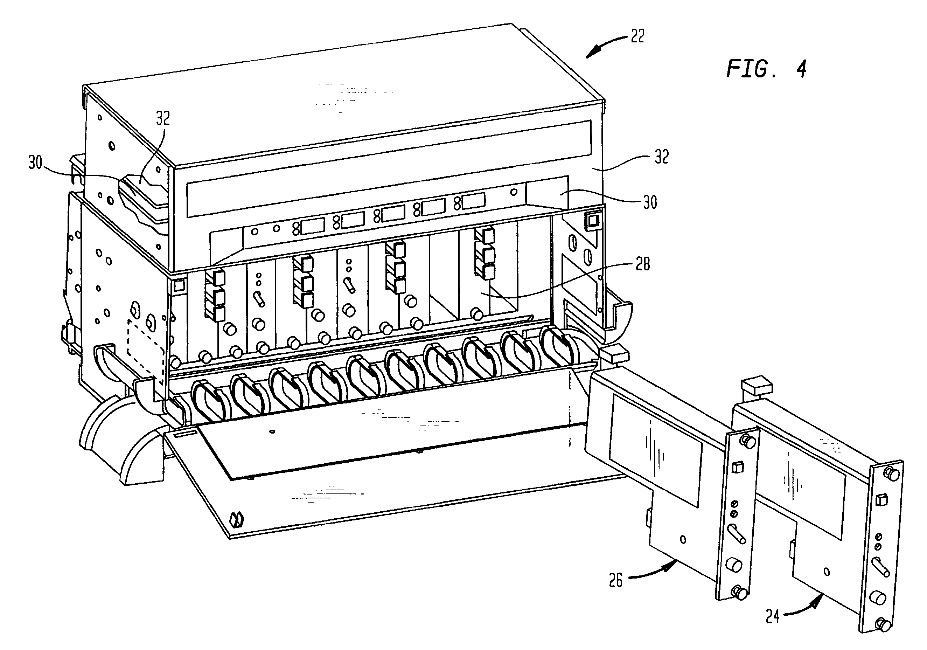

The structure of the monitor module 24 is best described by now referring to Fig. 3. In Fig. 3, it can be seen that the monitor module 24 is contained within a module housing 40. The module housing 40 is sized to fit within the fiber distribution shelf 22 (Fig. 4) within the fiber administration system 10 (Fig. 1). When viewed from the side, the modular housing 40 is generally rectangular in shape having a relief at the lower rear corner of the rectangle. An optical input port 42 enters the modular housing 40 within the area of the relief. The area of the relief is required to provide an incoming optical fiber 43 the needed room to curve and engage the optical input port 42 within the confines of the monitoring shelf 22 (Fig. 3).

A terminated optical fiber 43 connects to the optical input port 42 of the monitor module 24 and provides the monitor module 24 with an incoming optical test signal. The received optical test signal is directed to an optical detector 48. The optical detector 48 creates an analog electrical signal that corresponds to the optical test signal. The analog electrical signal is passed through both a pre-amplifier 50 and a logarithmic amplifier 52 to both amplify and linearize the analog electrical signal. The analog electrical signal is then converted to a digital signal using an analog-to-digital converter 54.

A microprocessor 60 is contained within the monitor module 24. The microprocessor 60 receives digital signals from the analog-to-digital converter 54. As such, the microprocessor 60 is capable of directly monitoring the received optical test signal in real time.

As discussed, the optical monitor module 24 essentially performs a real time optical power monitoring function. After the monitor module is powered up for a given time period and is receiving a test signal, from a test signal transmitter module for example, an initialize command originating from systems controller 20, 32 directs the microprocessor to store the current average optical power reading as a reference value to which all subsequent readings are compared. If the optical power changes by more than a predetermined threshold, for example 3dB, the module is programmed to alarm. More specifically, the module's alarm circuitry includes a built-in hysteresis function so as to limit false alarming. An optical power variation (or threshold variation) of more than 3dB results in what is referred to as a "major" alarm. If the optical power drops below the module's measurement sensitivity, the module generates a "critical" alarm, usually signifying a fiber outage. Critical alarms normally result if the fiber path is disrupted or cut. A flashing "fault" LED or other indicator on the module 24 indicates an alarm condition.

When used in conjunction with a fiber administration system, the monitor module 24 transmits optical power measurements to a test system controller 20 (Fig. 1) of the fiber administration system approximately once every minute. Optical performance data is logged for each fiber path and can be graphically displayed. Statistical performance data is available for hourly, daily, weekly and annual measurement intervals. User selectable thresholds can be set to alarm on deviations in optical power or changes in power level stability for each measurement interval. In general, the monitor module monitors the incoming power at 100 millisecond intervals. Every 15 seconds, the samples are taken and fed to the microprocessor for statistical analysis. Examples of the samples which are taken and then processed include a running sum of the samples and running sum of the samples squared (sample²). These specific samples are useful for statistical analysis of the source and would be necessary for calculation of average power and associated standard deviation calculations. Other samples which would be apparent to a person skilled in the art are able to be read in order to perform long and short term statistical analysis.

As was mentioned previously, the monitor module of the present invention may be used within a fiber administration system 10 of the type described in Fig. 1. In that case, the monitor module 24 and other associated modules may be controlled by the systems controller 20 of the fiber administration system 10. This further allows data collected at the monitor module to be transmitted to and processed by the systems controller for use by the fiber administration system. Accordingly, this provides a means of collecting and correlating information with regard to individual fibers which are coupled to the fiber administration system. As discussed, this information may be used to provide statistical analysis with respect to individual communications channels. In addition, when the transmitter module is used with a fiber administration system, certain modules may be physically located at the fiber administration system while other modules may be remotely located, e.g., the monitor modules. In this case, the information which is collected at the remote location may be transmitted back to the fiber administration system in a client server type fashion in which case client server type communication devices would be utilized in order enable communications between the two locations.

An additional feature of the monitor module is that through the inclusion of non-volatile memory which is factory pre-programmed, e.g., EEPROM or other like ROM or RAM device understood to a person skilled in the art, the modules are made to be "self aware" upon power up. That is, individual modules are given an identity at he factory which may include, among other things, type of module, code version, serial number, manufacturing date, firmware version, connector type, calibration data, wavelength data and number of channels data. Accordingly, when used in a compatible fiber administration system, the module will automatically be identified to the system controller or shelf controller upon initial power up and after any power outages or subsequent power ups.

Referring again to Fig. 3, it can be seen that the microprocessor 60 is coupled to a connector port 68 on the module housing 40. A shelf controller 30 (Fig. 4) connects to the connector port 68 of the monitor module 24, thereby creating a direct link between the shelf controller and the microprocessor 60 within the monitor module. The shelf controller 30 (Fig. 4) can therefore read data from the microprocessor 60 that represents the optical test data received by the monitor module 24.

The monitor module 24 also contains a manual control interface 66. The manual control interface 66 contains various buttons and switches that enable the monitor module 24 to be activated and controlled manually by a technician. The manual control interface 24 is connected to the microprocessor 60. The microprocessor 60 is connected to the shelf controller 30 (Fig. 4), through the connector port 68 at the rear of the monitor module 24. Accordingly, the manual control interface 66 can be controlled by the systems controller through the microprocessor 60. The shelf controller 30 (Fig. 3) can therefore be used to deactivate the manual control interface to prevent tampering with the monitor module 24.

One application for use of the monitor module 24 of the present invention is for loop back monitoring of a fiber line to customer premises equipment. In such an application, the monitor module will likely be included within loopback monitoring shelves. Regardless of whether the monitoring shelves are part of a larger fiber administration system or are self-contained, the function and structure of the loop back monitoring shelves remains the same. Referring to Fig. 4, it can be seen that the loop back monitoring shelf 22 supports matched sets of modules. The matched sets of modules include an optical transmitter module 26, a monitor module 24 and a wavelength division multiplexing module 28. The two dedicated optical fibers that lead to a specific customer premises are coupled to the matched set of modules, wherein the outgoing optical fiber connects to the optical transmitter module 26 and the incoming optical fiber connects to the monitor module 24.

The loop back monitoring shelf 22 contains a shelf controller 30. The shelf controller 30 is a programmable computer control that is compatible with the systems controller 20 (Fig. 1) of the overall fiber administration system 10 (Fig. 1). The shelf controller 20 gathers information from both the optical transmitter module 24 and the monitor module 26 for use in the statistical analysis and the continued operation of the loop back monitoring shelf 22 within the fiber administration system 10 (Fig. 1).

For each optical fiber pair, that is joined to the loop back monitoring shelf 22, a matched set of modules is provided. As has been previously stated, the matched set of modules includes a wavelength division multiplexing module 28, a monitor module 26 and an optical transmitter module 24. The structure of the wavelength division multiplexing module 28 is known in field of fiber administration systems and is therefore not set forth in detail in this document. The structure of the optical transmitter module 24 is disclosed in related co-pending U.S. Patent Application No. 09/???,???, entitled Intelligent Optical Transmitter Module, and filed ???, 1999, the disclosure of which is incorporated into this application by reference.

It will be understood that the embodiment of the present invention system and method specifically shown and described is merely exemplary and that a person skilled in the art can make alternate embodiments using different configurations and functionally equivalent components. All such alternate embodiments are intended to be included in the scope of this invention as set forth in the following claims.

## Claims

1. A monitor module assembly, comprising:
a housing sized to fit within a shelf in a fiber administration system, said housing having a front surface and a rear surface;
an optical signal detector contained within said housing, wherein said optical signal detector produces an electrical signal in response to a received optical signal;
an optical input port accessible on the exterior of said housing, wherein said optical signal detector is internally coupled to said optical input port; and
a microprocessor disposed within said housing, wherein said microprocessor receives said electrical signal from said optical signal detector.

2. The assembly according to Claim 1, wherein said optical signal detector produces an analog electrical signal.

3. The assembly according to Claim 2, further including a logarithmic amplifier, coupled to said optical signal detector for linearizing said analog electrical signal.

4. The assembly according to Claim 3, further including an analog-to-digital converter, coupled to said logarithmic amplifier and said microprocessor, wherein said analog-to-digital converter converts said analog electrical signal into a digital signal that is read by said microprocessor.

5. The assembly according to Claim 1, further including an electrical connector port accessible on said housing, wherein said electrical connector port is coupled to said microprocessor.

6. The assembly according to Claim 5, further including manual controls on said front surface of said housing, wherein said manual controls are coupled directly to said electrical connector port and are coupled to said microprocessor at some point external of said housing.

7. The assembly according to Claim 1, wherein said microprocessor periodically samples said received optical signal for data to perform a statistical analysis thereon.

8. The assembly of Claim 7, wherein said statistical analysis includes calculation of a standard deviation.

9. The assembly of Claim 1, further including a memory element having factory programmed identity parameters, wherein said monitor module outputs said identity parameters upon power up when said module is used within a fiber administration system.

10. In a fiber administration system having shelves for retaining a plurality of different modules, an optical monitor module, comprising:
a module housing sized to fit within one of the shelves of the fiber administration system;
an optical input port accessible on said module housing;
an optical signal detector disposed within said module housing, wherein said optical signal detector produces an electrical signal in response to an optical signal received through said optical input port;
a microprocessor control internal to said module reads said electrical signal from said optical signal detector.

11. The module according to Claim 10, wherein said optical signal detector produces an analog electrical signal that corresponds to said optical signal received by said optical signal detector.

12. The module according to Claim 11, further including a logarithmic amplifier, coupled to said optical signal detector for linearizing said analog electrical signal.

13. The module according to Claim 12, further including an analog-to-digital converter, coupled to said logarithmic amplifier and said microprocessor, wherein said analog-to-digital converter converts said analog electrical signal into a digital signal that is read by said microprocessor.

14. The module according to Claim 10, wherein said microprocessor periodically samples said received optical signal for data to perform a statistical analysis thereon.

15. The module of Claim 14, wherein said statistical analysis includes calculation of a standard deviation.

16. The module of Claim 10, further including a memory element having factory programmed identity parameters, wherein said monitor module outputs said identity parameters upon power up when said module is used within a fiber administration system or loop back system.

17. The module of claim 10, wherein said module couples to a systems controller of said fiber administration system, said module being operable to communicate with said systems controller, whereby information pertaining to specific optical fibers which couple to one or more modules may be correlated at said fiber administration system.

18. A fiber administration system for an optical fiber network, comprising:
a frame defining at least one bay;
shelves on each said bay, wherein said shelve include at least one monitoring system shelf;
a shelf controller disposed on each said monitoring system shelf;
at least one optical monitor module retained on each said monitoring system shelf, wherein each optical monitor module is optically coupled to an optical fiber pathway in the optical fiber network, and wherein said optical monitor module detects optical signals traveling in said optical fiber pathway an converts those optical signals into electrical signals.

19. The system according to Claim 18, wherein each said optical monitor module contains a microprocessor that reads said electrical signals.

20. The system according to Claim 19, wherein said monitor module includes an electrical connector port that is internally coupled to said microprocessor.

21. The system according to Claim 20 wherein said shelf controller interconnects with said microprocessor through said electrical connector port.

22. The system according to Claim 20, wherein said optical detector module has manual controls thereon and said manual controls are coupled directly to said shelf controller through said electrical connector port, whereby signals produced by said manual controls are read by said microprocessor through said shelf controller.
